# EUROPÄISCHE PATENTANMELDUNG

(11) **EP 1 234 720 A2**
(43) Veröffentlichungstag der Anmeldung: **28.08.2002**
(21) Anmeldenummer: 02002503.7
(22) Anmeldetag: 02.02.2002
(51) Int. Cl.: B60Q 3/02, B60J 7/00

(54) **Fahrzeugdach mit Beleuchtungselement**

(30) Priorität: 23.02.2001 DE 10109008
(71) Anmelder: Webasto Vehicle Systems International GmbH, 82131 Stockdorf (DE)
(72) Erfinder: Nolles, Rinse Dennis, 81243 München (DE); Wobido, Thomas, 81245 München (DE); Kölbl, Michael, 82061 Neuried (DE)
(74) Vertreter: Wiese, Gerhard

(57) **Zusammenfassung**

Die Erfindung betrifft ein Fahrzeugdach, das mit einem transparenten Dachbereich (10) und einem Abdeckelement (50) versehen ist, welches unterhalb des transparenten Dachbereichs angeordnet ist und verstellbar ist, um den transparenten Dachbereich bezüglich des Fahrzeuginnenraums (28) abzudecken oder mindestens teilweise freizugeben. Das Abdeckelement (50) ist als Rolloanordnung (50) mit einer auf eine Wickeleinrichtung (52) aufwickelbaren Rollobahn (54) ausgebildet und mit einem zum Fahrzeuginnenraum (28) hin wirkenden flächigen Beleuchtungselement (58) versehen.

## Beschreibung

Die vorliegende Erfindung betrifft ein Fahrzeugdach gemäß dem Oberbegriff von Anspruch 1.

Ein solches gattungsgemäßes Fahrzeugdach ist beispielsweise aus der DE 199 02 244 A1 bekannt, bei dem der transparente Dachbereich von einem eine Dachöffnung verschließenden transparenten, ausstellbaren und nach hinten verschiebbaren Deckel gebildet wird, während das Abdeckelement von einem plattenförmigen Schiebehimmel gebildet wird.

Ferner ist es bekannt, statt eines plattenförmigen Schiebehimmels eine auf eine vorgespannte Walze aufwickelbare Rollobahn als Abdeckelement vorzusehen, wie dies beispielsweise aus DE 197 22 722 A1 oder DE-PS 1 102 581 bekannt ist.

Aus DE 299 08 994 U1 ist es bekannt, die Unterseite eines Schiebedaches mit einer Elektrolumineszenzfolie zu versehen, um das Schiebedach zum Beleuchten des Fahrzeuginnenraums zu verwenden. Die Folie ist dabei mittels einer selbstklebenden Schicht an dem Schiebedach angebracht.

Aus DE 199 09 471 A1 und DE 199 09 472 A1 ist es bekannt, den Innenraum eines Fahrzeugs an verschiedenen Stellen mit Dekorelementen zu versehen, die eine Flüssigkristallpolymerschicht aufweisen und deren Farbton durch Anlegen einer Spannung verändert werden kann.

Bei den bekannten Fahrzeugdächern mit transparentem Dachbereich und verstellbarem Abdeckelement ist nachteilig, dass bei geschlossenem Abdeckelement in der Nacht kein Licht von oben durch den Dachbereich in den Fahrzeuginnenraum gelangen kann.

Es ist Aufgabe der vorliegenden Erfindung, ein Fahrzeugdach mit einem transparenten Dachbereich und einem flexiblen verstellbaren Abdeckelement so zu gestalten, dass auch bei geschlossenem Abdeckelement in der Dunkelheit für angenehme Beleuchtungsverhältnisse mit geringem Aufwand gesorgt werden kann.

Diese Aufgabe wird erfindungsgemäß gelöst durch ein Fahrzeugdach gemäß Anspruch 1.

Bei dieser Lösung ist vorteilhaft, dass dadurch, dass an der Unterseite des als Rollanordnung ausgebildeten Abdeckelements ein flächiges Beleuchtungselement vorgesehen ist, ohne wesentliche Bauraumvergrößerung bei geschlossenem Abdeckelement bei Bedarf für eine angenehme Beleuchtung des Fahrzeuginnenraums gesorgt werden kann.

Vorzugsweise ist das Beleuchtungselement als Elektrolumineszenzelement ausgebildet, was den Vorteil hat, dass durch entsprechende Ansteuerung eine Beleuchtung in variablen Farben möglich ist, die Bauraumeinbußen vernachlässigbar sind, da Elektrolumineszenzelemente extrem dünn ausgebildet sein können, sowie die Wärmeentwicklung des Elektrolumineszenzelements minimal ist, wodurch eine Wärmeentwicklung im Kopfbereich der Fahrzeuginsassen vermieden werden kann.

Das Elektrolumineszenzelement kann entweder direkt, beispielsweise durch Aufdrücken, auf das Abdeckelement als Schicht aufgebracht werden oder es kann als Folie ausgebildet sein, die an dem Abdeckelement beispielsweise mittels Aufkleben befestigt wird.

Weitere bevorzugte Ausgestaltungen der Erfindung ergeben sich aus den Unteransprüchen.

Im folgenden wir die Erfindung anhand der beigefügten Zeichnungen beispielhaft näher erläutert. Dabei zeigt:
- Fig. 1: eine schematische Seitenansicht eines erfindungsgemäßen Fahrzeugdaches mit einem als Rolloanordnung ausgebildeten Abdeckelement und
- Fig. 2: schematisch den Aufbau eines erfindungsgemäßen flächigen Beleuchtungselements

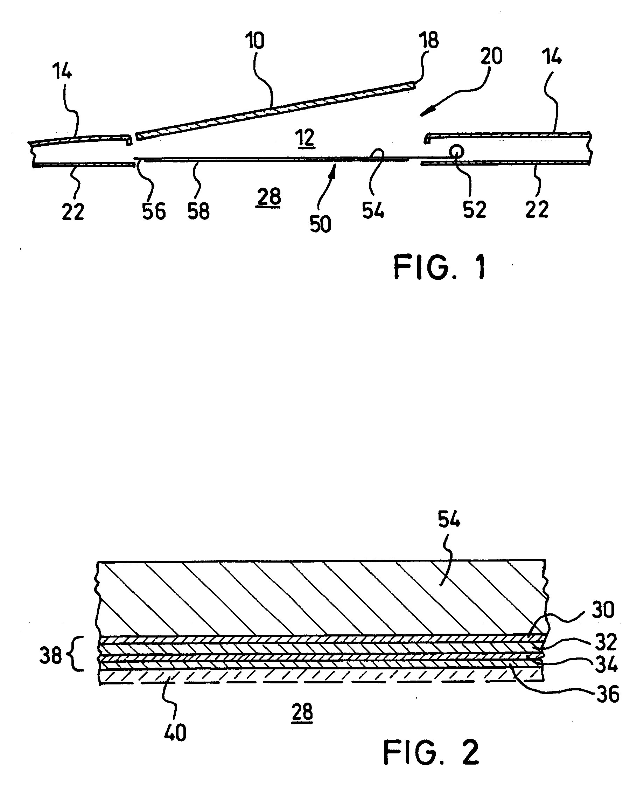

In Fig. 1 ist schematisch eine Seitenansicht eines öffnungsfähigen Fahrzeugdaches gezeigt, wobei in einer festen Dachhaut 14 eine Dachöffnung 12 vorgesehen ist, welche von einem verstellbaren Deckel 10 verschlossen bzw. wahlweise mindestens zum Teil freigegeben werden kann. In Fig. 1 ist der Deckel 10 in einer Stellung gezeigt, in welcher die Deckelhinterkante 18 über den hinteren Rand der Dachöffnung 12 ausgestellt ist, um einen Lüftungsspalt 20 zu erzeugen. Der Dekkel 10 ist in bekannter Weise transparent ausgebildet, wobei es sich vorzugsweise um einen Glas- oder Kunststoffdeckel handelt. Als weitere Verstellmöglichkeiten können für den Deckel 10 vorgesehen sein, dass er in der ausgestellten Position nach hinten verschoben werden kann (Spoilerdach) oder dass er aus der Schließstellung abgesenkt und nach hinten unter die feste Dachhaut 14 geschoben werden kann, um die Dachöffnung 12 freizugeben (Schiebe-Hebe-Dach). Ferner kann der Deckel auch als reines Schiebedach ohne Ausstellmöglichkeit ausgebildet sein.

Unterhalb der festen Dachhaut 14 ist in üblicher Weise ein Festhimmel 22 vorgesehen, welcher im Bereich der Dachöffnung 12 unterbrochen ist. Für diese Öffnung in dem Festhimmel 22 ist eine in Dachlängsrichtung verschiebbare Rolloanordnung 50 vorgesehen, welche mindestens zu einem gewissen Grad lichtundurchlässig ist, um bei Bedarf in der in Fig. 1 gezeigten Stellung, in welcher sie unterhalb der Dachöffnung 12 angeordnet ist, einen unerwünschten direkten Sonnenlichteinfall durch den transparenten Deckel 10 hindurch in den Fahrzeuginnenraum 28 zu verhindern. Die in Fig. 1 gezeigte Stellung der Rolloanordnung 50 kann beispielsweise auch bei geschlossenem oder vollständig geöffnetem Deckel 10 eingenommen werden. Um einen ungehinderten Lichteinfall durch die Dachöffnung 12 bzw. den Deckel 10 hindurch zu ermöglichen, kann die Rolloanordnung 50 mit ihrer Rollobahn 54 in an sich bekannter Weise nach hinten in den Bereich zwischen dem Festhimmel 22 und der festen Dachhaut 14 zurückgeschoben und dabei auf eine Wickeleinrichtung 52 aufgewickelt werden.

Auf der Innenseite der Rollobahn 54 ist ein flächiges Beleuchtungselement 58 angeordnet, welches vorzugsweise als Elektrolumineszenzelement ausgebildet ist. Das Elektrolumineszenzelement 58 kann als Folie ausgebildet sein, welche an der Unterseite der Rollobahn 54 befestigt ist, beispielsweise mittels einer Klebeverbindung, z.B. indem die Folie auf ihrer Rückseite selbstklebend ausgebildet ist. Die Ausbildung von Elektrolumineszenzfolien ist beispielsweise DE 299 08 994 U1 beschrieben.

Alternativ kann das Elektrolumineszenzelement als Elektrolumineszenzschicht ausgebildet sein, die direkt auf der Unterseite der Rollobahn 54 aufgebracht ist. Diese Möglichkeit ist beispielhaft in Fig. 2 schematisch veranschaulicht. Dabei wird auf die Unterseite der Rollobahn 54 eine erste flächige Elektrode 30 aufgebracht, an welche sich eine Schicht aus elektrolumineszenzfähigem Material 32 anschließt, auf welche wiederum eine zweite Elektrode 34 folgt. Auf die zweite Elektrode 34 kann eine Schutzschicht 36 folgen, um das Elektrolumineszenzelement vor Beschädigungen zu schützen. Die genannten Schichten können mittels bekannter Beschichtungsverfahren auf die Unterseite der Rollobahn 54 aufgebracht werden und sind insgesamt mit dem Bezugszeichen 38 bezeichnet. Das als Elektrolumineszenzelement ausgebildete Beleuchtungselement 58 kann bezüglich des Fahrzeuginnenraums 28 durch einen Kaschierstoff 40 (in Fig. 2 gestrichelt angedeutet) verdeckt sein, wobei der Kaschierstoff 40 mindestens zum Teil lichtdurchlässig ist.

Grundsätzlich ist es auch möglich, dass das als Elektrolumineszenzelement ausgebildete Beleuchtungselement 58 statt auf die Unterseite der Rollobahn 54 auf die Rückseite des Kaschierstoffes 40 aufgebracht wird.

Durch Anlegen einer Spannung zwischen den beiden Elektroden 30 und 34, was über geeignete Zuleitungen erfolgt, kann das Lumineszenzmaterial 32 zu einer Lichtemission angeregt werden, wobei durch Verändern der Spannung die Helligkeit eingestellt werden kann und durch Verändern der Frequenz, wenn eine Wechselspannung angelegt wird, die Farbtemperatur des ausgesandten Lichts verändert werden kann. Zu diesem Zweck sind entsprechende nicht gezeigte Bedienelemente vorgesehen, die es dem Fahrzeugbenutzer erlauben, Helligkeit und gegebenenfalls Farbe des von dem Lumineszenzelement emittierten Lichts einzustellen.

Auf diese Weise kann insbesondere bei Nacht oder in Tunneln bei geschlossener Rolloanordnung 50 für eine angenehme Innenraumbeleuchtung gesorgt werden.

Die Wickelwalze 52 ist mit einer Drehvorspannung, beispielsweise mittels einer Feder, beaufschlagt, wobei die Vorspannung in Aufwickelrichtung wirkt. Bei der in Fig. 1 gezeigten Stellung ist die Rollobahn 54 entgegen der Vorspannkraft der Wickelwalze 52 nach vorn vollständig ausgezogen, um die Dachöffnung 12 bzw. den Deckel 10 bezüglich des Fahrzeuginnenraums 28 zu verdecken, um eine übermäßige Sonneneinstrahlung zu verhindern. Das vordere Ende 56 der Rollobahn 54 ist dabei im vorderen Bereich der Dachöffnung 12 arretiert.

Gemäß Fig. 1 ist die Rollobahn 54 zumindest über einen Teilbereich an ihrer Unterseite mit einem Elektrolumineszenzelement 58 versehen, welches entweder als auf die Rollobahn 54 aufgebrachte, z.B. aufgeklebte, Folie realisiert ist oder direkt als Schicht auf die Rollobahn 54 aufgebracht ist. Der grundsätzliche Schichtaufbau ist dabei wie in Fig. 2. Alternativ kann das Elektrolumineszenzelement auch auf der der Dachöffnung 12 zugewandten Seite der Rollobahn 54 angeordnet sein, wenn die Rollobahn 54 zumindest teilweise lichtdurchlässig ist. Dadurch kann verhindert werden, dass das Lumineszenzelement aus dem Fahrzeuginnenraum 28 direkt sichtbar ist.

Die Bauhöhe des Elektrolumineszenzelements beträgt 0,5 mm oder weniger. Als Unterlage für den beschriebenen schichtartigen Aufbau gemäß Fig. 2 eignet sich eine Vielzahl von Materialien, z.B. Blech, Glas, Kunststoff, Textilien etc. Die Schichten können beispielsweise mittels eines Druckverfahrens aufgebracht werden.

## Patentansprüche

1. Fahrzeugdach, mit einem transparenten Dachbereich (10) und einem Abdeckelement (50), welches unterhalb des transparenten Dachbereichs angeordnet ist und verstellbar ist, um den transparenten Dachbereich (10) bezüglich des Fahrzeuginnenraums (28) abzudecken oder mindestens teilweise freizugeben, wobei das Abdeckelement (50) mit einem zum Fahrzeuginnenraum (28) hin wirkenden flächigen Beleuchtungselement (58) versehen ist, **dadurch gekennzeichnet, dass** das Abdeckelement als Rolloanordnung (50) mit einer auf eine Wickeleinrichtung (52) aufwickelbaren Rollobahn (54) ausgebildet ist.

2. Fahrzeugdach gemäß Anspruch 1, **dadurch gekennzeichnet, dass** das Beleuchtungselement (58) als Elektrolumineszenzelement ausgebildet ist.

3. Fahrzeugdach gemäß Anspruch 1 oder 2, **dadurch gekennzeichnet, dass** das Beleuchtungselement als direkt auf das Abdeckelement (50) aufgebrachte Schicht (38) ausgebildet ist.

4. Fahrzeugdach gemäß Anspruch 2 oder 3, **dadurch gekennzeichnet, dass** das Elektrolumineszenzelement (58) als Folie ausgebildet ist.

5. Fahrzeugdach gemäß Anspruch 4, **dadurch gekennzeichnet, dass** die Elektrolumineszenzfolie auf das Abdeckelement (50) aufgeklebt ist.

6. Fahrzeugdach gemäß einem der Ansprüche 1 bis 4, **dadurch gekennzeichnet, dass** das Elektrolumineszenzelement (58) auf die Rollobahn (54) aufgedruckt ist.

7. Fahrzeugdach gemäß einem der vorhergehenden Ansprüche, **dadurch gekennzeichnet, dass** der transparente Dachbereich als verstellbares Schließelement (10) zum wahlweisen Verschließen bzw. mindestens teilweisen Freigeben einer Öffnung (12) in einer festen Dachhaut (14) ausgebildet ist.

8. Fahrzeugdach gemäß Anspruch 7, **dadurch gekennzeichnet, dass** das Schließelement von einem Deckel (10) eines Schiebedaches, Schiebe-Hebe-Daches oder Spoilerdaches gebildet wird.
